# EUROPEAN PATENT APPLICATION

(11) **EP 3 291 104 A1**
(43) Date of publication of application: **07.03.2018**
(21) Application number: 16187364.1
(22) Date of filing: 06.09.2016
(51) Int. Cl.: G06F 17/30, G06F 17/17

(54) **METHOD AND APPARATUS FOR DISPLAYING GRAPHS IN A NETWORKED COMPUTER SYSTEM AND COMPUTER PROGRAMS IMPLEMENTING THE METHOD**

(71) Applicant: Siemens Aktiengesellschaft, 80333 München (DE)
(72) Inventor: Verma, Amit, 91058 Erlangen (DE)

(57) **Abstract**

In a networked computer system (16), a computing device (10) displays a graph derived from data values stored at a remote resource (12). Instead of waiting for all data values to be received, the computing device (10) receives a partial set of values and performs interpolation to derive the remaining values, so that the computing device (10) can start plotting the graph as soon as it has received the data from the resource (12).

## Description

The present disclosure relates to methods and apparatus for displaying graphs in networked computer systems, and furthermore to a computer programs implementing the method as well as computer program products comprising the computer programs.

Graphs are a key tool for visualizing and understanding data in many fields of human endeavor. Computing devices have long been used to store and process data and display graphs derived from the stored data. In the example of industrial applications, graphs are a core component of applications used in data services platforms, Industrial Internet of Things, human-machine interfaces (HMI) and supervisory control and data acquisition (SCADA) systems.

With the advent of distributed computing architecture, data can be stored centrally at a resource and accessed by a remote computing device. In the example of cloud services, machine interface data is stored centrally in a cloud infrastructure. The data is accessed and analyzed by various user applications. The front-end of these applications runs typically on a web browser on a user's local computer, or a smartphone or handheld device, or other such human machine interface (HMI) devices.

For example, consider the data indicating the throughput of an industrial pump at a given point in time. This data is in the form of a time series graph where time is on the X-axis and throughput is on the Y-axis. Data from the pump is sent to a central cloud platform and then accessed by users via cloud based applications. A user would typically access the graph of a pump's throughput on a computing device such as a smartphone or tablet computer.

The front-end on a user's computing device sends a request to the cloud application for fetching data for a certain time range. On receiving the requested data, the front-end application plots the data on the HMI. If the network connection between the cloud and the user device is slow, the graph data is received with delay, and hence the graph on the user's device is plotted with a delay. The large loading time of a graph degrades user experience. When the user device uses a cellular network (GSM, etc.) the problem is even worse.

Therefore, there is a need for a method and a system to reduce the delay in displaying a graph on a computing device where data values for plotting the graph are stored at a remote resource.

According to a first aspect of the disclosure there is provided, in a networked computer system, a method for operating a computing device to automatically display a graph derived from a set of data values stored at a resource which is remote from said computing device; said method comprising:
(a) receiving at the computing device a first sub-set of the set of data values from the resource;
(b) interpolating between the data values in the first sub-set to generate interpolated data values;
(c) displaying the first sub-set of data values together with the interpolated data values;
(d) receiving at the computing device a second sub-set of data values from the resource;
(e) replacing corresponding interpolated data values with data values from the second sub-set;
(f) interpolating between the data values from each of the received sub-sets to generate fresh interpolated data values; and
(g) displaying the received sub-sets of data values together with the fresh interpolated data values.

A graph may also be referred to as a chart and may comprise any graphical representation of data. This method means that the computing device can display a graph quickly when there is a slow or degraded network connection, or where there are very many data values stored at the remote resource. The graph that is displayed will first of all include an approximation of the actual data values. The approximation is defined by an interpolation step. This approximation will be updated and refined automatically as further actual data values are received.

Optionally, the method further comprises displaying the received sub-sets of data values before interpolating between the data values in the received sub-sets.

This allows for even quicker display of data values. The actual values are shown first before the interpolation is carried out. Then, after the interpolation, the actual and interpolated values are displayed together.

Optionally, the method further comprises repeating steps (d) to (g) automatically for further successive sub-sets of data values until the complete set of data values stored at the resource has been received by the computing device.

Optionally, the set of data values stored at a resource comprises a sequence of ordered data values.

Optionally, when the set of data values stored at a resource comprises a sequence of ordered data values, the first subset of the set of data values received from the resource comprises a first data value from the sequence and a last data value from the sequence.

It is possible to include only the first and last data values in the first sub-set of data values, which allows for an interpolation to be based on a minimum set of data. However, if desired, the first sub-set may also include additional data values.

Optionally, a successive sequence of data sub-sets is received from the resource, comprising said first sub-set followed by said second sub-set and optionally one or more further data sub-sets; and wherein:
a sub-set has data values wherein neighbouring data values span N positions within the sequence of ordered data values stored at the resource;
the next successive subset comprises each (N/M)th data value between the neighbouring data values, where M defines a sampling ratio of the data values.

Optionally, the value of M is adjustable.

Optionally, the value of M is decreased if a network connection connecting the computing device with the remote resource is identified as being relatively slow or degraded, or where there are very many data values stored at the remote resource; or the value of M is increased if a network connection connecting the computing device with the remote resource is identified as being relatively fast or is operating correctly, or where there are relatively few data values stored at the remote resource.

The adjustment of the sampling ratio in this way allows for optimisation of the time taken to display the actual data values at the computing device. When the sampling ratio is increased, there will be relatively more data values collected as part of each successive sub-sample and relatively fewer values will need to be interpolated, so that actual values can be plotted more quickly if the network conditions are favourable. When the sampling ratio is decreased, there will be relatively fewer data values collected as part of each successive sub-sample and relatively more values will need to be interpolated, so that meaningful information can be displayed more quickly if network conditions are not favourable.

Optionally, the method comprises said computing device receiving from the resource an instruction defining an interpolation method; and said interpolation is carried out according to the received method.

An interpolation method defined at the resource can be automatically used by the computing device . The computing device does not need to know or make a decision about the appropriate method of interpolation, and can be prevented from choosing a method that is inappropriate. The interpolation method may be carried out by an interpolation filter implemented in software and/or hardware as appropriate. The definition of the interpolation method at the resource allows for an interpolation method to be chosen that will be optimized or customized according to the nature of the specific data values that are stored at the resource.

According to a second aspect of the disclosure there is provided, in a networked computer system comprising a resource which stores a set of data values; a method for operating said resource to send said data values to a computing device remote from said resource for being displayed as a graph; said method comprising:
(a) receiving a request from a computing device for transmission of the set of data values;
(b) sending to the computing device a first sub-set of the set of data values;
(c) receiving from the computing device a request for transmission of a further sub-set of data values; and
(d) sending to the computing device a second sub-set of the set of data values.

Optionally, the method further comprises automatically repeating steps (b) to (d) for further successive sub-sets of data values until the complete set of data values stored at the resource has been received by the computing device. Optionally, the set of data values stored at the resource comprises a sequence of ordered data values.

Optionally, when the set of data values stored at the resource comprises a sequence of ordered data values, the first sub-set of the set of data values sent by the resource comprises a first data value from the sequence and a last data value from the sequence, allowing the interpolation initially to be based on a minimal amount of data.

Optionally, a successive sequence of data sub-sets is sent, said sequence comprising said first sub-set followed by said second sub-set and optionally one or more further data sub-sets; and wherein:
a sub-set has data values wherein neighbouring data values span N positions within the sequence of ordered data values stored at the resource;
the next successive subset comprises each (N/M)th data value between the neighbouring data values, where M defines a sampling ratio of the data values.

Optionally, the value of M is adjustable.

Optionally, the value of M is decreased if a network connection connecting the computing device with the remote resource is identified as being relatively slow or degraded, or where there are very many data values stored at the remote resource; or the value of M is increased if a network connection connecting the computing device with the remote resource is identified as being relatively fast or is operating correctly, or where there are relatively few data values stored at the remote resource.

Optionally, the resource automatically sends an instruction defining an interpolation method for use by the computing device.

According to a third aspect of the disclosure there is provided a computing device arranged to automatically display a graph derived from a set of data values stored at a resource which is remote from said computing device; said computing device being arranged to:
(a) receive a first sub-set of the set of data values from the resource;
(b) interpolate between the data values in the first subset to generate interpolated data values;
(c) display the first sub-set of data values together with the interpolated data values;
(d) receive a second sub-set of data values from the resource;
(e) replace corresponding interpolated data values with data values from the second sub-set;
(f) interpolate between the data values from each of the received sub-sets to generate fresh interpolated data values; and
(g) display the received sub-sets of data values together with the fresh interpolated data values.

The computing device of the third aspect may be arranged to carry out any of the methods of the first aspect, and to function as generally described herein. The computing device comprises a processor and a display device.

According to a fourth aspect of the disclosure there is provided a resource for use in a networked computer system, said resource storing a set of data values and being arranged to:
(a) receive a request from a computing device for transmission of the set of data values;
(b) send to the computing device a first sub-set of the set of data values;
(c) receive from the computing device a request for transmission of a further sub-set of data values; and
(d) send to the computing device a second sub-set of the set of data values.

The resource of the fourth aspect may be arranged to carry out any of the methods of the second aspect, and to function as generally described herein.

According to a fifth aspect of the disclosure there is provided a computer program product storing instructions, that when executed by a computing device enable said computing device to implement a method to display a graph derived from a set of data values stored at a resource which is remote from said computing device; said method comprising:
(a) receiving at the computing device a first sub-set of the set of data values from the resource;
(b) interpolating between the data values in the first sub-set to generate interpolated data values;
(c) displaying the first sub-set of data values together with the interpolated data values;
(d) receiving at the computing device a second sub-set of data values from the resource;
(e) replacing corresponding interpolated data values with data values from the second sub-set;
(f) interpolating between the data values from each of the received sub-sets to generate fresh interpolated data values; and
(g) displaying the received sub-sets of data values together with the fresh interpolated data values.

The computer program product of the fifth aspect may be arranged to carry out any of the methods of the first aspect, and when executed by a computing device may enable the provision of a computing device according to the third aspect; and may function as generally described herein.

According to a sixth aspect of the disclosure there is provided a computer program product storing instructions, that when executed by a resource in a networked computer system, enables said resource to implement a method to send said data values to a computing device remote from said resource for display as a graph; said method comprising:
(a) receiving a request from a computing device for transmission of the set of data values;
(b) sending to the computing device a first sub-set of the set of data values;
(c) receiving from the computing device a request for a further sub-set of data values; and
(d) sending to the computing device a second sub-set of the set of data values.

The computer program product of the sixth aspect may be arranged to carry out any of the methods of the second aspect, and when executed by a computing device may enable the provision of a computing device according to the fourth aspect; and may function as generally described herein.

The computer program products of the fifth and sixth aspects may be stored on or transmitted as one or more instructions or code on a computer-readable medium. Computer-readable media includes both computer storage media and communication media including any medium that facilitates transfer of a computer program from one place to another. A storage media may be any available media that can be accessed by a computer. By way of example such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fibre optic cable, twisted pair, digital subscriber line (DSL), or wireless technologies such as infra-red, radio, and microwave, then the coaxial cable, fibre optic cable, twisted pair, DSL, or wireless technologies such as infra-red, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media. The instructions or code associated with a computer-readable medium of the computer program product may be executed by a computer, e.g., by one or more processors, such as one or more digital signal processors (DSPs), general purpose microprocessors, ASICs, FPGAs, or other equivalent integrated or discrete logic circuitry.

Further aspects, features and advantages of the present invention will become apparent from the drawings and de-tailed description of the following preferred embodiments.

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein
- FIG 1: shows the results of an example algorithm for interpolating data values according to a specific embodiment of the disclosure;
- FIG 2: shows the operation of the algorithm whose effects are shown in FIG 1; and
- FIG 3: shows devices that may be used for implementing the disclosure.

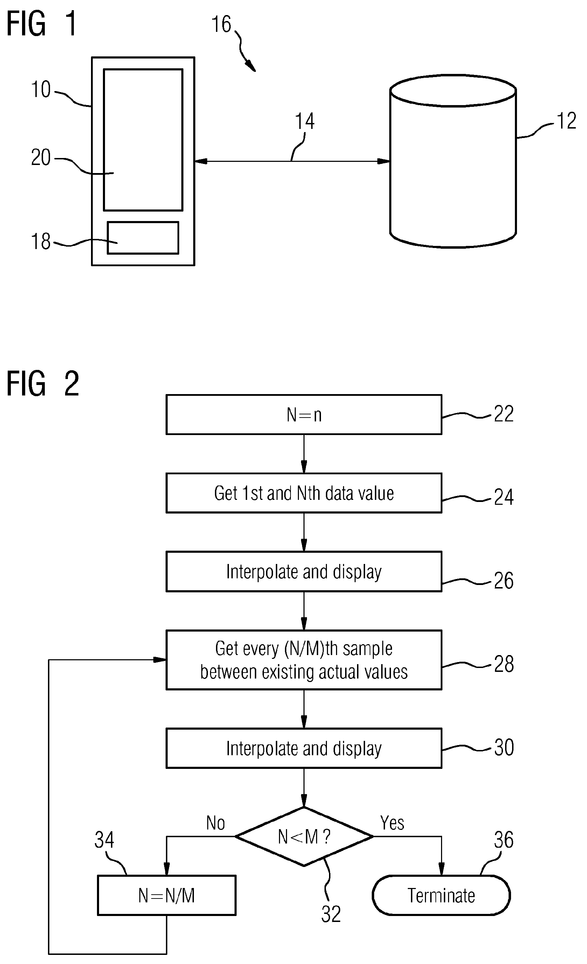

This disclosure describes a method of incrementally plotting a time series or other type of graph at a computing device based on data received from a resource over a network, such as a cloud network. As shown in FIG 1, a computing device 10 and a resource 12 communicate via a network 14 and together form a networked computer system 16. The networked computer system 16 here is very simple and comprises the computing device 10 and resource 12; but it will be appreciated that a networked computer system 16 may comprise many devices and components, and the resource 12 may communicate with multiple computing devices 10. The resource 12 comprises storage means such as a non-volatile digital memory, for storing data values.

The resource 12 is a computing device and may be a server (as used in server-client architectures) or it may be a peer device (as used in peer to peer networking). The disclosure is not limited to any particular network topology or architecture.

The computing device 10 comprises a processor 18 and a display 20. The illustrated computing device 10 is a smartphone although it will be understood as discussed above that the disclosure is in no way limited to smartphones. The computing device 10 also includes many other components such as communication components for wired or wireless communication over the network 14; and drivers and rendering engines for controlling the display 20. However, the functioning of these other components is well understood and so will not be described in more detail herein.

The computing device 10 may be provided with an application for carrying out the methods of the disclosure and displaying the graph. Similarly, the resource 12 may be provided with a suitable application. The computing device 10 and resource 12 applications may be provided as computer program products which can be executed by the respective devices.

As an illustrative example, consider plotting a twodimensional time series graph which has time on an X-axis and a certain parameter value (such as pump throughput) on a Yaxis. Data values of the time series are stored at a resource 12. A user application on a computing device 10 wants to visualize the graph for a time period of N seconds, with a resolution of 1 second (N values on the graph). Let the values be (x1, y1) , (x2, y2) ,... xN, yN).

In an existing method, the computing device 10 will send a request to the resource 12 to fetch the list of N values, receive the list of N values in the resource's response, and then plot the N values on the graph. If N is large, there is a large delay involved and the graph takes a lot of time to load.

In an approach according to the disclosure, following steps are involved:
1. The resource 12 receives a data fetch request from a computing device 10 for plotting a graph. The request contains the time series variable and the time duration for which the variable has to be plotted.
2. The resource 12 queries an internal data store to fetch the required data. Data from the internal store could be fetched all at once, or in parts, depending on the application and the use case.
3. The resource 10 sends a response to the computing device 12 which includes the first and last data values of the graph, (x1, y1) and (xN, yN). This response could also include additional data values. Furthermore, the resource 12 could also include in the response an interpolation method that could be used by the computing device 10 to interpolate the data. The interpolation method could be defined in an appropriate instruction, or be encoded in any suitable manner.
4. The computing device 10 receives the data values from the first response and plots them on the graph.
5. The computing device 10 interpolates the 2nd, 3rd, up to (N-1)th value based on the interpolation method indicated by the resource 12. When no interpolation method is indicated, a default method could be used. Some interpolation methods that can be applied are (i) piecewise constant interpolation, (ii) linear interpolation, (iii) polynomial interpolation, and (iv) spline interpolation. After calculating the interpolated values, the computing device 10 plots them on the graph. Interpolated values could be indicated with a different style (symbol or color) on the graph, to indicate the difference between the actual values and interpolated values on the graph.
6. The resource 12 responds with 1x (N/M), 2x (N/M) ,... (M-1)x(N/M)th values. The computing device 10 receives these values and updates the interpolated values with the actual values received from the resource 12.
7. The computing device 10 re-calculates the interpolated values of the remaining non-actual values, based on the new values received from the resource 12.
8. For every time period 1 to 1x (N/M) , 1x (N/M) to 2x (N/M) , ..., (M-2 ) x (N/M) to (M-1 ) x (N/M) , steps 6 and 7 are repeated in a recursive manner. For example, for the first time period, N is set to N = lx(N/M). The recursive process is continued until the new N < M, that is, until the resulting time period is greater than the number of increments.

This algorithm is illustrated in FIG 2, from the perspective of the computing device 10. At step 22 the number of data values, N, is set (N=n). At step 24, a first sub-set of data values is collected which in this case consists of the first data value and the last (Nth) data value. These are then interpolated and displayed at step 26; then at step 28 every N/Mth sample value between the existing actual values is obtained; these are then interpolated and displayed at step 30. At step 32, a check is made as to whether N<M. If N is not less than M, the process continues by setting at step 34 N/M as the new value of N and then repeating the steps of obtaining 28 each N/Mth sample then interpolating and displaying 30 them. This continues until at step 32 it is determined that N<M at which points the process terminates 36.

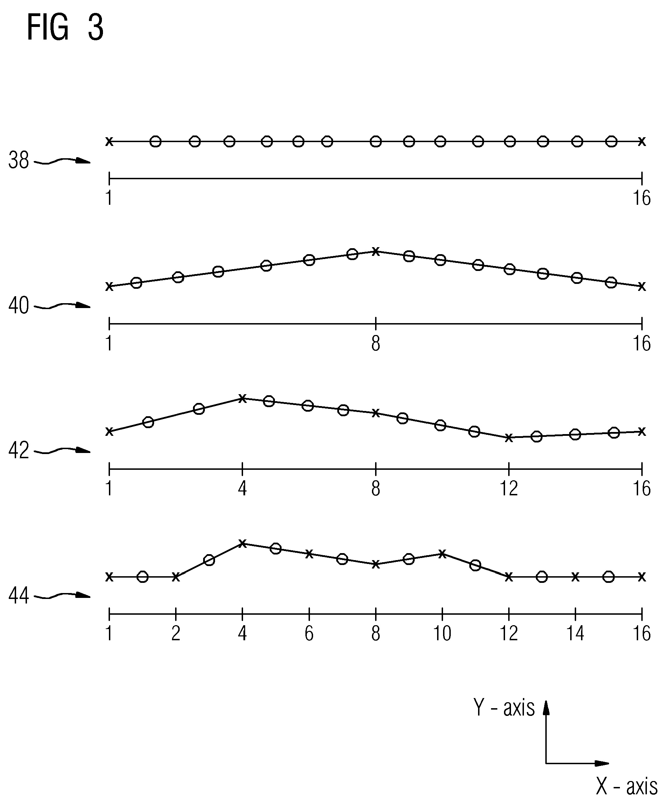

FIG 3 shows the effect of this process for the illustrative example of N=16 data points and M=2 (binary increments), and using a simple linear interpolation filter. In this figure, an actual data value received from the resource 12 is shown with a cross and an interpolated value is shown with a circle. A first plot 38 displays a first sub-set of data values. After that, N/M = 16/2 = 8, so a second plot 40 displays every 8th value between the existing data values N=1 and N=16, which in this case means the single value N=8. Thereafter, N is set to 8, so every fourth data value is plotted in a third plot 42 as N/M = 8/2 = 4. Similarly, a fourth plot 44 then displays every second data value between the existing values.

This process means that a computing device 10 can start plotting the graph as soon as it has received the data from the resource 12. As and when more data is received from the resource 12, the graph is gradually represented more accurately. This avoids the delay in plotting the graph on the user device.

In the above, the value M effectively acts as a sampling ratio defining how quickly the data values are retrieved from the resource 12 by the computing device 10. It is possible for the value of this sampling ratio to be adjusted depending on factors including network health, connection speed, and size of data set requested by the computing device 10.

Although the specific example described here is for two dimensions and time series data, it is to be appreciated that the disclosure can apply for data involving more than two dimensions. Also, the algorithm described below assumes increments of the number of data values in the multiple of M (M = 2 for binary increments). Typically, N is much greater than M, for example, typical values might be N=1000 and M=3.

Those skilled in the art will readily understand the invention can be applied not only to cloud based applications, but other applications involving HMI, SCADA, etc. where the data for plotting a graph is transferred over a network. The disclosure applies to a wide variety of use cases including without limitation the Internet of Things, finance data, business intelligence and analytics applications, etc.

In addition to the embodiments of the aspects of the present invention described above, those of skill in the art will be able to arrive at a variety of other arrangements and steps which, if not explicitly described in this document, nevertheless embody the principles of the invention and fall within the scope of the appended claims.

Those skilled in the art will readily understand the invention can be applied to plants, plant sections (e.g. test fields), plant components (e.g. assembly lines or production lines), plant units (e.g. pumps, squeezer, compressors or machines) .

Furthermore, those skilled in the art will readily understand the invention can be used in production industries, manufacturing industries, continuous industries, process industries and batch processing industries.

## Claims

1. In a networked computer system (16), a method for operating a computing device (10) to automatically display a graph derived from a set of data values stored at a resource (12) which is remote from said computing device (10);
said method comprising:
(a) receiving at the computing device (10) a first sub-set of the set of data values from the resource (12);
(b) interpolating between the data values in the first sub-set to generate interpolated data values;
(c) displaying the first sub-set of data values together with the interpolated data values;
(d) receiving at the computing device (10) a second subset of data values from the resource (12);
(e) replacing corresponding interpolated data values with data values from the second sub-set;
(f) interpolating between the data values from each of the received sub-sets to generate fresh interpolated data values; and
(g) displaying the received sub-sets of data values together with the fresh interpolated data values.

2. The method of claim 1, further comprising displaying the received sub-sets of data values before interpolating between the data values in the received sub-sets.

3. The method of claim 1 or claim 2, further comprising repeating steps (d) to (g) automatically for further successive sub-sets of data values until the complete set of data values stored at the resource (12) has been received by the computing device (10).

4. The method of any preceding claim, wherein the set of data values stored at a resource (12) comprises a sequence of ordered data values.

5. The method of claim 4, wherein the first sub-set of the set of data values received from the resource (12) comprises a first data value from the sequence and a last data value from the sequence.

6. The method of claim 4 or claim 5, wherein a successive sequence of data sub-sets is received from the resource (12), comprising said first sub-set followed by said second sub-set and optionally one or more further data sub-sets; and wherein:
a sub-set has data values wherein neighbouring data values span N positions within the sequence of ordered data values stored at the resource;
the next successive subset comprises each (N/M)th data value between the neighbouring data values, where M defines a sampling ratio of the data values.

7. The method of claim 6, wherein the value of M is adjustable.

8. The method of claim 7, wherein the value of M is decreased if a network connection connecting the computing device (10) with the remote resource (12) is identified as being relatively slow or degraded, or where there are very many data values stored at the remote resource (12); or the value of M is increased if a network connection connecting the computing device (10) with the remote resource (12) is identified as being relatively fast or is operating correctly, or where there are relatively few data values stored at the remote resource (12).

9. The method of any preceding claim, wherein said computing device (10) receives from the resource (12) an instruction defining an interpolation method; and said interpolation is carried out according to the received method.

10. In a networked computer system (16) comprising a resource (12) which stores a set of data values; a method for operating said resource (12) to send said data values to a computing device (10) remote from said resource (12) for being displayed as a graph;
said method comprising:
(a) receiving a request from a computing device (10) for transmission of the set of data values;
(b) sending to the computing device (10) a first sub-set of the set of data values;
(c) receiving from the computing device (10) a request for transmission of a further sub-set of data values; and
(d) sending to the computing device (10) a second sub-set of the set of data values.

11. The method of claim 10, wherein a successive sequence of data sub-sets is sent, said sequence comprising said first sub-set followed by said second sub-set and optionally one or more further data sub-sets; and wherein:
a sub-set has data values wherein neighbouring data values span N positions within the sequence of ordered data values stored at the resource;
the next successive subset comprises each (N/M)th data value between the neighbouring data values, where M defines a sampling ratio of the data values.

12. A computing device (10) arranged to automatically display a graph derived from a set of data values stored at a resource (12) which is remote from said computing device (10);
said computing device (10) being arranged to:
(a) receive a first sub-set of the set of data values from the resource (12);
(b) interpolate between the data values in the first subset to generate interpolated data values;
(c) display the first sub-set of data values together with the interpolated data values;
(d) receive a second sub-set of data values from the resource (12);
(e) replace corresponding interpolated data values with data values from the second sub-set;
(f) interpolate between the data values from each of the received sub-sets to generate fresh interpolated data values; and
(g) display the received sub-sets of data values together with the fresh interpolated data values.

13. A resource (12) for use in a networked computer system (16), said resource (12) storing a set of data values and being arranged to:
(a) receive a request from a computing device (10) for transmission of the set of data values;
(b) send to the computing device (10) a first sub-set of the set of data values;
(c) receive from the computing device (10) a request for transmission of a further sub-set of data values; and
(d) send to the computing device (10) a second sub-set of the set of data values.

14. A computer program product storing instructions, that when executed by a computing device (10) enable said computing device (10) to implement a method to display a graph derived from a set of data values stored at a resource (12) which is remote from said computing device (10);
said method comprising:
(a) receiving at the computing device (10) a first sub-set of the set of data values from the resource (12);
(b) interpolating between the data values in the first sub-set to generate interpolated data values;
(c) displaying the first sub-set of data values together with the interpolated data values;
(d) receiving at the computing device (10) a second subset of data values from the resource (12);
(e) replacing corresponding interpolated data values with data values from the second sub-set;
(f) interpolating between the data values from each of the received sub-sets to generate fresh interpolated data values; and
(g) displaying the received sub-sets of data values together with the fresh interpolated data values.

15. A computer program product storing instructions, that when executed by a resource (12) in a networked computer system (16), enables said resource (12) to implement a method to send said data values to a computing device (10) remote from said resource (12) for display as a graph;
said method comprising:
(a) receiving a request from a computing device (10) for transmission of the set of data values;
(b) sending to the computing device (10) a first sub-set of the set of data values;
(c) receiving from the computing device (10) a request for a further sub-set of data values; and
(d) sending to the computing device (10) a second sub-set of the set of data values.
